# FASCICULE DE BREVET EUROPEEN

(11) **EP 1 943 368 B1**
(45) Date de publication et mention de la délivrance du brevet: **09.12.2015**
(21) Numéro de dépôt: 06820214.2
(22) Date de dépôt: 12.10.2006
(51) Int. Cl.: C23C 2/26, C23C 2/28

(54) **PROCEDE DE FABRICATION D'UNE PIECE A TRES HAUTES CARACTERISTIQUES MECANIQUES A PARTIR D'UNE TOLE LAMINEE ET REVETUE**
VERFAHREN ZUM HERSTELLEN EINES BAUTEILS MIT SEHR GUTEN MECHANISCHEN EIGENSCHAFTEN AUS GEWALZTEM UND BESCHICHTETEM STAHLBLECH
METHOD OF PRODUCING A PART WITH VERY HIGH MECHANICAL PROPERTIES FROM A ROLLED COATED SHEET

(30) Priorité: 27.10.2005 WO PCT/FR2005/002689
(43) Date de publication de la demande: 16.07.2008
(73) Titulaire: ArcelorMittal France, 93200 Saint Denis (FR)
(72) Inventeur: BELLO, Alain, F-57330 Hettange-Grande (FR); FABBRI, Vivian, F-54310 Homecourt (FR); DUGELAY, Gérard, F-57000 Metz (FR)
(74) Mandataire: Domenego, Bertrand
(86) Numéro de dépôt international: PCT/FR2006/002316
(87) Numéro de publication internationale: WO 2007/048895

(56) Documents cités:
- EP-A1- 1 143 029
- EP-B1- 0 365 682
- WO-A-2004/094684
- US-A1- 2004 163 439

## Description

L'invention concerne la fabrication de pièces d'acier revêtu laminé à chaud ou à froid présentant une haute résistance mécanique ainsi qu'une bonne résistance à la corrosion.

Pour certaines applications, on cherche à réaliser des pièces en acier combinant une résistance mécanique élevée, une grande résistance aux chocs et une bonne tenue à la corrosion. Ce type de combinaison est particulièrement désirable dans l'industrie automobile où l'on recherche un allégement significatif des véhicules. Ceci peut être notamment obtenu grâce à l'utilisation de pièces d'aciers à très hautes caractéristiques mécaniques dont la microstructure est martensitique ou bainito-martensitique : des pièces anti-intrusion, de structure ou participant à la sécurité des véhicules automobiles telles que : traverses de pare-choc, renforts de portière ou de pied milieu, bras de roue, nécessitent par exemple les qualités mentionnées ci-dessus.

La publication EP1630244A1 décrit un procédé de fabrication d'une pièce d'acier par formage à chaud sous presse, à partir d'un flan pré-revêtu d'un alliage de zinc comprenant moins de 0,5% en poids d'aluminium, de façon à éviter la formation excessive d'oxydes d'aluminium à la surface du revêtement.

La publication EP0365682B1 décrit un procédé de production d'une tôle d'acier prépeinte, comprenant une étape de revêtement par trempé à chaud dans un bain de zinc, comprenant notamment de 0,3 à 3,5% d'aluminium en poids.

Le brevet FR20004427 et la demande de brevet EP1143029A1 divulguent un procédé de fabrication où on approvisionne une tôle d'acier laminée avec un pré-revêtement métallique de zinc ou d'un alliage à base de zinc, l'acier possédant par exemple une résistance à la rupture de l'ordre de 500MPa. On découpe ensuite la tôle pour obtenir un flan, et l'on soumet celui-ci à un traitement thermique en vue de former un composé allié en surface et d'effectuer un emboutissage à chaud du flan. On refroidit ensuite ce flan dans des conditions aptes à conférer une dureté élevée à l'acier. A partir d'un acier présentant une résistance initiale de 500 MPa, on obtient par exemple des pièces avec une résistance mécanique supérieure à 1500 MPa. Le composé allié formé par interdiffusion du pré-revêtement et de l'acier au cours du traitement thermique assure ainsi une protection contre la corrosion, la décarburation, et une fonction de lubrification à haute température qui permet une augmentation de la durée de vie des outils d'emboutissage à chaud.

En comparaison avec un procédé d'emboutissage à chaud sur pièces nues c'est-à-dire sans pré-revêtement, la présence du composé procure une protection vis-à-vis de la décarburation lors du chauffage en four. On s'affranchit également de la nécessité de grenailler ou de sabler ultérieurement les pièces pour éliminer la couche superficielle irrégulière qui se forme par oxydation en four.

On peut cependant rencontrer des limitations à la mise en oeuvre de ce procédé dans certaines applications qui nécessitent des propriétés particulières du revêtement formé par alliation :
- Les pièces embouties à chaud peuvent comporter des zones à concavité marquée. Compte tenu de la différence de dureté à chaud et de rhéologie entre l'acier de base et le revêtement, on peut éventuellement rencontrer un phénomène d'indentation du revêtement dans l'acier de base, en particulier dans des zones très déformées. Pour des pièces très sollicitées mécaniquement, on cherche à éviter ces indentations, zones d'amorçage potentiel de défauts.
- Lors du traitement thermique conduisant à l'alliation entre l'acier et le pré-revêtement, on assiste à une germination de phases Fe-Zn riches en fer et à une diffusion du zinc à proximité de ces sites de germination. Cette diffusion crée des lacunes, conduisant éventuellement à la création de défauts de compacité à un niveau microscopique. On recherche donc les conditions de fabrication les plus favorables pour réduire ou éliminer ces défauts de compacité dans le revêtement.
- On cherche également à minimiser l'usure de l'outillage lors des opérations de mise en forme, qui peut être plus ou moins marquée en fonction du revêtement. On a remarqué que des revêtements à forte rugosité étaient désavantageux vis-à-vis de la tenue de l'outillage. On recherche donc les conditions permettant de diminuer la rugosité de ce revêtement.
- On cherche également à obtenir un aspect superficiel régulier du revêtement après traitement thermique d'alliation, dans un but d'une éventuelle mise en peinture ultérieure ou d'utilisation comme pièces visibles. En particulier, on cherche à éviter l'apparition de faïençage superficiel après traitement thermique : un tel défaut d'aspect du revêtement est caractérisé par la juxtaposition de cellules dont la taille est généralement de quelques millimètres, séparées par des joints. Au sein d'une même cellule, l'épaisseur du revêtement est sensiblement constante alors que l'épaisseur du dépôt est irrégulière au niveau des joints de cellules.

La présente invention a pour but de résoudre les problèmes évoqués ci-dessus. Elle vise en particulier à mettre à disposition un procédé de fabrication de pièces d'acier laminées à chaud ou à froid pré-revêtues d'un alliage à base de zinc, comportant une étape de traitement d'alliation, le revêtement obtenu après alliation présentant simultanément une bonne compacité, une grande résistance aux phénomènes de faïençage et une rugosité associée à une longévité satisfaisante de l'outillage de mise en forme. On recherche également un procédé n'entraînant pas de défaut d'indentation.

Dans ce but, l'invention a pour objet une pièce en acier revêtu d'un composé constitué, sur plus de 90% de son épaisseur, d'au moins une phase à base Fe-Zn dont la teneur pondérale en Fe est supérieure ou égale à 65% et dont le rapport Fe/Zn est compris entre 1,9 et 4, le composé étant formé par au moins un traitement thermique d'alliation entre l'acier et un pré-revêtement, le pré-revêtement étant un alliage à base de zinc comprenant, les teneurs étant exprimées en poids, entre 0,7 et 2,5% d'aluminium, et à titre optionnel, un ou plusieurs éléments choisis parmi : Pb ≤0,003 %, Sb ≤0,003%, Bi ≤0,003%, 0,002%≤Si≤0,070%, La< 0,05 %, Ce<0,05 %, le solde étant constitué de zinc et des inévitables impuretés.

Selon un mode préféré, le pré-revêtement est un alliage dont la teneur en aluminium est supérieure à 0,7% et inférieure ou égale à 0,8% en poids. Préférentiellement encore, le pré-revêtement est un alliage dont la teneur en aluminium est supérieure à 0,8%, et inférieure ou égale à 2,5% en poids.

A titre préféré, la composition de l'acier comprend, les teneurs étant exprimées en poids : 0,15% ≤ C ≤ 0,5%, 0,5%≤ Mn ≤ 3%, 0,1% ≤ Si ≤ 0,5%, 0,01% ≤ Cr ≤ 1%, Ti≤0,2%, Al ≤ 0,1%, S ≤ 0,05%, P ≤ 0,1%, 0,0005% ≤ B ≤ 0,010%, le reste de la composition étant constitué de fer et d'impuretés inévitables résultant de l'élaboration.

Selon un mode préféré, la composition de l'acier comprend, les teneurs étant exprimées en poids : 0,15% ≤ C ≤ 0,25%, 0,8%≤ Mn ≤ 1,5%, 0,1% ≤ Si ≤ 0,35%, 0,01% ≤ Cr ≤ 0,3%, Ti≤0,1%, Al ≤ 0,1 %, S ≤ 0,05%, P≤ 0,1%, 0,002% ≤ B ≤ 0,005%, le reste de la composition étant constitué de fer et d'impuretés inévitables résultant de l'élaboration.

L'invention a également pour objet un procédé de fabrication d'une pièce en acier revêtu, comportant les étapes selon lesquelles :
- on approvisionne une tôle d'acier laminée à chaud ou laminée à froid,
- on effectue un pré-revêtement métallique de la tôle par un alliage à base de zinc comprenant, les teneurs étant exprimées en poids, entre 0,7 et 2,5% d'aluminium, et à titre optionnel un ou plusieurs éléments choisis parmi :Pb ≤0,003 %, Sb ≤0,003% , Bi ≤0,003%, 0,002%≤Si≤0,070%, La< 0,05 %, Ce<0,05 %, le solde étant constitué de zinc et des inévitables impuretés, on effectue optionnellement un pré-traitement thermique, on découpe la tôle pour obtenir une pièce, on chauffe la pièce à une température comprise entre Ac1 et Ac3+100°C pendant une durée de maintien supérieure ou égale à 20s, de manière à former, par alliation entre l'acier et le pré-revêtement, un revêtement allié constitué, sur plus de 90% de son épaisseur, d'au moins une phase à base Fe-Zn dont la teneur pondérale en Fe est supérieure ou égale à 65% et dont le rapport Fe/Zn est compris entre 1,9 et 4, et de manière à conférer une structure partiellement ou totalement austénitique à l'acier,
- on déforme la pièce à chaud et on refroidit la pièce dans des conditions propres à conférer les caractéristiques mécaniques visées pour la pièce d'acier.

Préférentiellement encore, le pré-revêtement est un alliage dont la teneur en aluminium est supérieure à 0,7%, et inférieure ou égale à 0,8% en poids.

A titre préférentiel, le pré-revêtement est un alliage dont la teneur en aluminium est supérieure à 0,8%, et inférieure ou égale à 2,5% en poids.

Selon un mode préféré, on approvisionne une tôle d'acier laminée à chaud ou laminée à froid, dont la composition comprend, les teneurs étant exprimées en poids : 0,15% ≤ C ≤ 0,5%, 0,5%≤ Mn ≤ 3%, 0,1% ≤ Si ≤ 0,5%, 0,01% ≤ Cr ≤ 1%, Ti≤0,2%, Al ≤ 0,1%, S ≤ 0,05%, P ≤ 0,1%, 0,0005% ≤ B ≤ 0,010%, le reste de la composition étant constitué de fer et d'impuretés inévitables résultant de l'élaboration.

Préférentiellement encore, on approvisionne une tôle d'acier laminée à chaud ou laminée à froid, dont la composition comprend, les teneurs étant exprimées en poids : 0,15% ≤ C ≤ 0,25%, 0,8%≤ Mn ≤ 1,5%, 0,1% ≤ Si < 0,35%, 0,01% ≤Cr ≤ 0,3%, Ti≤0,1%, Al ≤ 0,1%, S ≤ 0,05%, P ≤ 0,1%, 0,002% ≤ B ≤ 0,005%, le reste de la composition étant constitué de fer et d'impuretés inévitables résultant de l'élaboration.

Selon un mode particulier, le pré-traitement thermique comporte un chauffage à une température allant de 450°C à 520°C pendant une durée allant de 2 à 10 minutes.

L'invention a également pour objet l'utilisation d'une pièce décrite ci-dessus, ou fabriquée selon l'une des variantes décrites ci-dessus, pour la fabrication de pièces de structures ou de sécurité pour véhicule automobile terrestre à moteur.

D'autres caractéristiques et avantages de l'invention apparaîtront au cours de la description ci-dessous donnée à titre d'exemple et faite en référence aux figures jointes suivantes :
La figure 1 présente la variation d'un l'indice caractérisant la qualité du revêtement, en fonction de la teneur en aluminium du pré-revêtement à base de zinc
- La figure 2 présente une vue superficielle d'un faïençage observé sur la surface d'un acier revêtu selon un procédé de fabrication non conforme à l'invention.
- La figure 3 présente une vue microstructurale en coupe d'une tôle d'acier comportant un revêtement selon l'invention.

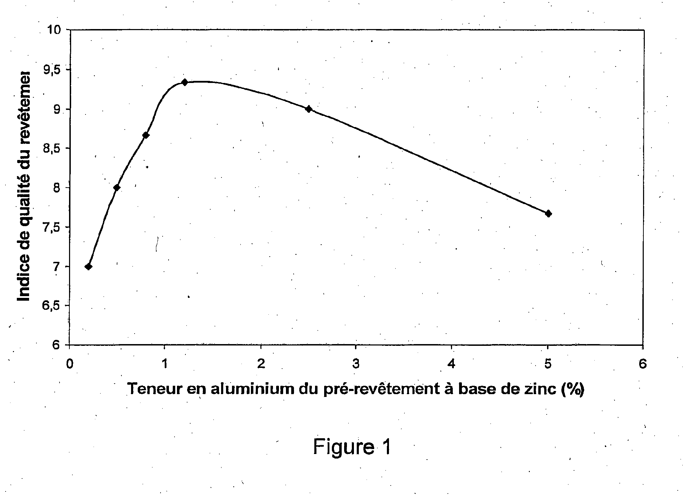

Par rapport à un pré-revêtement à partir de zinc pur, les inventeurs ont découvert de façon surprenante que la qualité du revêtement formé après un traitement thermique d'alliation entre l'acier de base et le pré-revêtement, était notablement améliorée lorsque le pré-revêtement était constitué d'un alliage à base de zinc contenant une quantité particulière en aluminium. La figure 1 présente la variation d'un l'indice caractérisant la qualité du revêtement, en fonction de la teneur en aluminium du pré-revêtement à base de zinc. Cet indice prend en compte les qualités de compacité, de rugosité et de résistance au faïençage du revêtement. La cotation de cet indice s'échelonne de 0 à 10 (10= très bonnes qualités du revêtement vis-à-vis de la compacité, de la rugosité et du résistance au faïençage, 0= comportement très médiocre)
- Lorsque la teneur pondérale en aluminium du pré-revêtement est inférieure à 0,5%, la compacité du revêtement allié formé est médiocre, celui-ci présentant des porosités de taille variable développées lors du traitement d'alliation. De plus, on relève dans ces conditions la présence d'un réseau de faïençage très développé.
- Lorsque la teneur en aluminium est supérieure à 2,5%, la qualité du revêtement diminue de façon importante en raison d'une augmentation de la rugosité.
- Lorsque la teneur en aluminium du pré-revêtement à base de zinc est comprise entre 0,5 et 0,7%, le revêtement présente une combinaison avantageuse, particulièrement en ce qui concerne les propriétés de rugosité et de résistance au faïençage. Ces propriétés sont encore améliorées lorsque la teneur en aluminium est supérieure à 0,7% et inférieure ou égale à 0,8%.
- Une combinaison optimale de compacité, de résistance à l'usure et au faïençage est obtenue lorsque la teneur en aluminium du bain de zinc est supérieure à 0,8% et inférieure ou égale à 2,5%.

Le pré-revêtement à base de zinc peut être déposé sur l'acier de base par un procédé au trempé, par électrodéposition, par un procédé de dépôt sous vide, ou par un quelconque autre procédé. Le dépôt est effectué préférentiellement en continu. Outre l'aluminium, le pré-revêtement à base de zinc peut contenir à titre optionnel un ou plusieurs éléments parmi :
- Le plomb, l'antimoine, le bismuth, la teneur pondérale de chacun de ces trois éléments étant inférieure ou égale à 0,003% pour éviter le phénomène de fleurage dans le cas de dépôts au trempé.
- Le silicium, en teneur pondérale supérieure ou égale à 0,002% permet d'éviter la formation d'une couche interfaciale FeₓAl_{y} trop importante. Cependant, lorsque la teneur en silicium est supérieure à 0,070%, on provoque la formation de mattes dans le cas de dépôts au trempé.
- Le lanthane et le cérium, en quantité inférieure ou égale à 0,05%, favorisent la mouillabilité de la surface vis-à-vis du bain de zinc.

Le pré-revêtement à base de zinc peut également contenir d'inévitables impuretés, telles que par exemple du cadmium, de l'étain ou du cuivre. Lorsque le pré-revêtement est effectué par un procédé au trempé, le fer, le manganèse peuvent être notamment ainsi présents à titre d'impuretés. Avantageusement, l'acier de base sur lequel on effectue lé pré-revêtement présente la composition pondérale suivante :
- Une teneur en carbone comprise entre 0,15 et 0,5%, et préférentiellement entre 0,15 et 0,25% en poids. Cet élément joue un grand rôle sur la trempabilité et sur la résistance mécanique obtenue après le refroidissement qui suit le traitement d'austénitisation et d'alliation. Au-dessous d'une teneur de 0,15% en poids, l'aptitude à la trempe est cependant trop faible et les propriétés de résistance sont insuffisantes. Par contre, au-delà d'une teneur de 0,5 % en poids, le risque de formation de défauts est accru lors de la trempe, particulièrement pour les pièces les plus épaisses. Une teneur en carbone comprise entre 0,15 et 0,25% permet d'obtenir une résistance comprise entre 1250 et 1650MPa environ.
- Outre son rôle de désoxydant, le manganèse a également un effet important sur la trempabilité en particulier lorsque sa teneur en poids est au moins de 0,5% et préférentiellement de 0,8%. Cependant, une quantité trop importante (3% en poids, ou préférentiellement 1,5%) conduit à des risques de ségrégation excessive.
- La teneur en silicium de l'acier doit être comprise entre 0,1 et 0,5 % en poids, et de préférence entre 0,1 et 0,35%. Outre son rôle sur la désoxydation de l'acier liquide, cet élément contribue au durcissement de l'acier mais sa teneur doit être cependant limitée pour éviter la formation excessive d'oxydes et pour favoriser la revêtabilité.
- Au delà d'une teneur supérieure à 0,01%, le chrome augmente la trempabilité et contribue à l'obtention d'une résistance importante après l'opération de formage à chaud, et cela dans les différentes parties de la pièce après le refroidissement suivant le traitement thermique d'austénitisation et d'alliation. Au delà d'une teneur égale à 1%, (préférentiellement 0,3%), la contribution du chrome à l'obtention de cette homogénéité de propriétés mécaniques est saturée.
- L'aluminium est un élément favorisant la désoxydation et la précipitation de l'azote. En quantité supérieure à 0,1 % en poids, il se forme des aluminates grossiers lors de l'élaboration, ce qui incite à en limiter la teneur à cette valeur.
- En quantités excessives, le soufre et le phosphore conduisent à une fragilité augmentée. C'est pourquoi il est préférable de limiter leur teneur respective à 0,05 et 0,1 % en poids.
- Le bore, dont la teneur doit être comprise entre 0,0005 et 0,010 % en poids, et de préférence entre 0,002 et 0,005% en poids, est un élément qui joue un rôle important sur la trempabilité. Au-dessous d'une teneur de 0,0005%, on n'obtient pas un effet suffisant sur la trempabilité. Le plein effet est obtenu pour une teneur de 0,002%. La teneur maximale en bore doit être inférieure à 0,010%, et préférentiellement 0,005%, pour ne pas dégrader la ténacité. - Le titane a une forte affinité pour l'azote et contribue donc à protéger le bore de façon à ce que cet élément se trouve sous forme libre pour jouer son plein effet sur la trempabilité. Au-delà de 0,2%, et plus particulièrement de 0,1%, il existe cependant un risque de former des nitrures de titane grossiers dans l'acier liquide qui jouent un rôle néfaste sur la ténacité.

Dans le procédé selon l'invention, on approvisionne une tôle d'acier laminée à chaud ou à froid de composition exposée ci-dessus, on effectue un pré-revêtement grâce à un alliage à base de zinc de composition exposée également ci-dessus. On découpe, avant ou après traitement thermique, la tôle pour obtenir une pièce. On chauffe ensuite cette pièce pour réaliser conjointement :
- Un traitement d'alliation de façon à former un revêtement constitué, sur plus de 90% de son épaisseur, d'au moins une phase à base Fe-Zn, dont la teneur pondérale en Fe est supérieure ou égale à 65% et dont le rapport Fe/Zn est compris entre 1,9 et 4.
   Au cours de la réaction d'alliation, on assiste à une diffusion d'éléments de la tôle d'acier, notamment du fer, du manganèse, du silicium, au sein du revêtement. De même certains éléments du pré-revêtement, notamment le zinc et l'aluminium, diffusent également.
- Une austénitisation de l'acier de base, cette austénitisation pouvant être partielle ou totale. On effectue avantageusement le chauffage dans un four de telle sorte que la pièce atteigne une température comprise entre Ac1 et Ac3+100°C. Ac1 et Ac3 désignent respectivement les températures de début et de fin de transformation austénitique. Selon l'invention, le temps de maintien à cette température est supérieur ou égale à 20s de manière à uniformiser la température dans les différents points de la pièce. On effectue alors l'opération de formage à chaud de la pièce, cette opération étant favorisée par la diminution de la limite d'écoulement et l'augmentation de la ductilité de l'acier avec la température. Partant de la structure partiellement ou totalement austénitique, on refroidira ensuite la pièce dans des conditions appropriées de façon à conférer les caractéristiques mécaniques visées pour la pièce : en particulier, on peut maintenir la pièce au sein d'un outillage pendant le refroidissement, l'outillage pouvant être lui même refroidi pour favoriser l'évacuation de la chaleur. Afin d'obtenir des propriétés mécaniques élevées, on visera de préférence l'obtention de microstructures martensitiques ou martensito-bainitiques.

A titre optionnel, on peut effectuer un pré-traitement thermique après l'étape de pré-revêtement mentionnée ci-dessus. Ce pré-traitement thermique comporte un chauffage allant de 450°C à 520°C pendant une durée allant de 2 à 10 minutes. Ce pré-traitement thermique augmente la compacité du revêtement formé après le traitement conjoint d'alliation et d'austénitisation, ainsi que la résistance à la fissuration de ce revêtement. On a également constaté que ce pré-traitement thermique favorisait la formation de revêtements constitués, sur plus de 90% de leur épaisseur, de deux phases riches en fer, dont la teneur pondérale en fer est supérieure ou égale à 65% et dont le rapport Fe/Zn est compris entre 1,9 et 4. En l'absence de pré-traitement, les revêtements tendent à être constitués d'une phase unique, riche en fer. Sans vouloir être lié à une théorie, on pense que ce pré-traitement modifie l'interface entre l'acier et le pré-revêtement, et donc les phénomènes de diffusion qui interviennent lors du traitement d'alliation ultérieur. A titre d'exemple, on a considéré des tôles d'acier laminées à froid d'épaisseur allant de 1,3 à 1,6 mm, de composition pondérale suivante :
Carbone : 0,22 %
Manganèse : 1,3%
Silicium : 0,30%
Phosphore <0,010%
Soufre : 0,005%
Chrome: 0,18%
Titane : 0,025%
Aluminium : 0,050%
B : 0,003%

Les tôles d'acier ont été pré-revêtues au trempé dans un bain à base de zinc contenant de l'aluminium en quantité allant jusqu'à 5%, du plomb, de l'antimoine et du bismuth, ces trois éléments en quantité inférieure à 0,003%, ainsi que du fer, au titre d'élément résiduel inévitable, en quantité inférieure à 0,020%. On a également effectué des pré-revêtements de zinc pur par électrodéposition. Dans le cas des revêtements au trempé, l'épaisseur du pré-revêtement est de 10 à 20 microns environ, dans le cas de revêtements électrodéposés, l'épaisseur est de l'ordre de 10 microns.

Une partie des tôles a subi un pré-traitement thermique d'alliation entre 470 et 520°C, pendant une durée allant de 2 à 10 minutes. On a ensuite découpé les tôles pour obtenir des pièces.

Ces pièces ont été ensuite chauffées jusqu'à la température de 930°C (soit Ac3+70°C), un maintien de 3 minutes étant réalisé à cette température. La durée de chauffage incluant le temps de montée en température et le temps de maintien à 930°C était de 10 minutes. Ces conditions conduisent à une transformation austénitique complète de l'acier de base. Durant cette phase de chauffage et de maintien, on a constaté que le pré-revêtement à base de zinc forme, sur plus de 90% de son épaisseur, une ou plusieurs phases Fe-Zn dont la teneur pondérale en fer est supérieure ou égale à 65% et dont le rapport Fe/Zn est compris entre 1,9 et 4, par une réaction d'alliation entre l'acier de base et le pré-revêtement à base de zinc. Ce revêtement allié à haut point de fusion et haute dureté présente une grande résistance à la corrosion et évite l'oxydation et la décarburation de l'acier de base sous-jacent pendant et après la phase de chauffage.

Après la phase de chauffage à 930°C, les pièces ont été déformées à chaud de 5%.

Un refroidissement ultérieur à l'air conduit à une structure martensito-bainitique. La résistance mécanique obtenue après un tel traitement est supérieure à 750 MPa.

On a ensuite caractérisé les revêtements alliés par les techniques suivantes :
- Des coupes micrographiques ont permis d'apprécier la compacité des revêtements, ainsi que la présence d'une indentation éventuelle de ceux-ci au sein de la tôle de base dans certaines zones déformées à chaud.
- Une observation visuelle ainsi que des mesures effectuées sur un rugosimètre ont permis de quantifier le paramètre de rugosité Ra et d'évaluer le faïençage des revêtements après traitement thermique et déformation, ainsi que la résistance à l'usure des outillages.
- Des observations en microscopie électronique à balayage en contraste de phases ont permis d'identifier les phases présentes dans les revêtements.

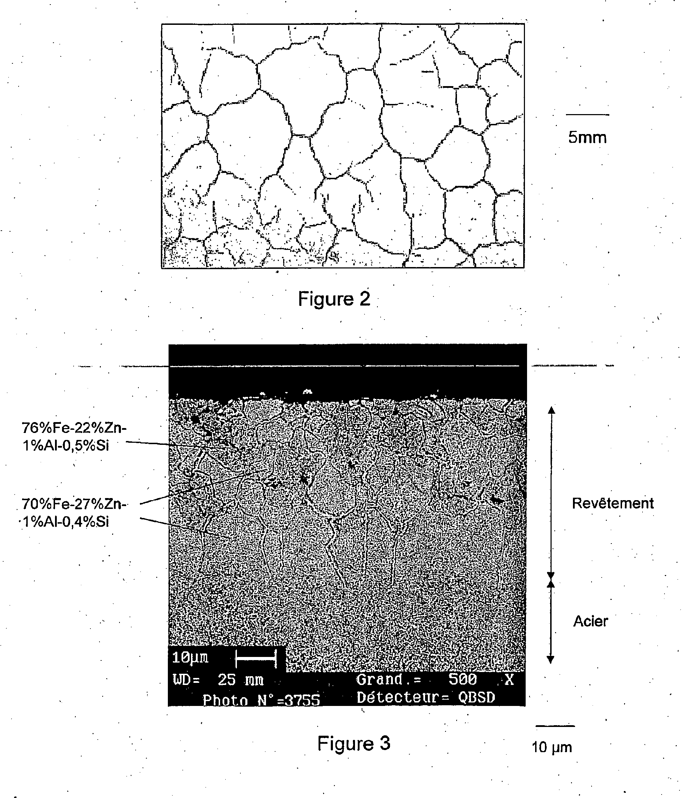

Les résultats de ces observations sont les suivants :
- Dans les conditions selon l'invention, le revêtement formé par alliation est constitué de phases Fe-Zn riches en fer, dont la teneur pondérale en fer est supérieure ou égale à 65% et dont le rapport Fe/Zn est compris entre 1,9 et 4, sur plus de 90% de son épaisseur. La micrographie de la figure 3, obtenue au microscope électronique à balayage illustre un exemple selon l'invention : le revêtement allié est constitué dans la grande majorité de son épaisseur de deux phases : une phase très pâle de composition moyenne : 70%Fe-27%Zn-1%Al-0,4%Si et une phase à l'aspect gris clair comprenant 76%Fe-22%Zn-1%Al-0,5%Si. On note la présence de manganèse en plus faibles quantités. La présence du silicium et du manganèse, ainsi naturellement que celle du fer, témoigne de la diffusion du métal de base vers le pré-revêtement durant le traitement d'alliation-austénitisation. Quelques rares porosités résiduelles (zones sombres) sont également présentes. En extrême surface de l'échantillon, on note la présence d'une teneur en zinc plus importante, ce qui renforce la protection contre la corrosion.
- Lorsque la teneur en aluminium est inférieure à 0,5% dans le pré-revêtement, la compacité du revêtement allié formé est médiocre, celui-ci présentant de nombreuses porosités plus ou moins développées. Dans ces conditions, on relève également la présence d'un réseau de faïençage superficiel très marqué. La figure 2 présente un exemple d'un tel faïençage pour une teneur en aluminium de 0,1% , c'est-à-dire hors des conditions de l'invention.
- Lorsque la teneur en aluminium est supérieure à 2,5% dans le pré-revêtement, la rugosité augmente de façon importante, passant de Ra= 1,3 microns à Ra= 3 microns.
- Lorsque la teneur en aluminium du pré-revêtement à base de zinc est comprise entre 0,5 et 2,5%, le revêtement présente une très bonne combinaison de compacité, de faible rugosité et d'absence de faïençage. On note également que le phénomène d'indentation du revêtement dans l'acier de base lors de la déformation à chaud, ne se produit pas, même dans les zones à concavité marquée. De plus, lorsque la teneur en aluminium est supérieure à 0,7% et préférentiellement à 0,8%, la résistance à l'apparition du faïençage est à son niveau le plus élevé ;

Ainsi, l'invention permet la fabrication de pièces revêtues à hautes caractéristiques, le revêtement métallique présentant une combinaison particulièrement favorable de compacité, de faible rugosité et d'absence de faïençage, ainsi que de résistance à l'indentation. Selon la composition de l'acier, en particulier sa teneur en carbone ainsi qu'en manganèse, chrome et bore, la résistance maximale des pièces peut être adaptée à l'utilisation visée.

Ces pièces seront utilisées avec profit pour la fabrication de pièces de sécurité, et notamment de pièces anti-intrusion ou de soubassement, de barres de renforcement, de pieds milieu, pour la construction de véhicules automobiles.

## Revendications

1. Pièce en acier revêtu d'un composé constitué, sur plus de 90% de son épaisseur, d'au moins une phase à base Fe-Zn dont la teneur pondérale en fer est supérieure ou égale à 65% et dont le rapport Fe/Zn est compris entre 1,9 et 4, ledit composé étant formé par au moins un traitement thermique d'alliation entre ledit acier et un pré-revêtement, ledit pré-revêtement étant un alliage à base de zinc comprenant, les teneurs étant exprimées en poids, entre 0,7 et 2,5% d'aluminium, et à titre optionnel, un ou plusieurs éléments choisis parmi:
Pb ≤0,003 %
Sb ≤0,003%
Bi≤0,003%
0,002%≤Si≤0,070%
La< 0,05 %
Ce<0,05 %,
le solde étant constitué de zinc et des inévitables impuretés

2. Pièce en acier selon la revendication 1, **caractérisée en ce que** ledit pré-revêtement est un alliage dont la teneur en aluminium est supérieure à 0,7% et inférieu ou égale à 0,8% en poids

3. Pièce en acier selon la revendication 1, **caractérisée en ce que** ledit pré-revêtement est un alliage dont la teneur en aluminium est supérieure à 0,8%, et inférieure ou égale à 2,5% en poids

4. Pièce en acier selon l'une quelconque des revendications 1 à 3, **caractérisée en ce que** la composition dudit acier comprend, les teneurs étant exprimées en poids :
0,15% ≤ C ≤ 0,5%
0,5%≤ Mn ≤ 3%
0,1% ≤ Si ≤ 0,5%
0,01% ≤ Cr ≤ 1%
Ti≤0,2%
Al ≤ 0,1 %
S ≤ 0,05%
P≤ 0,1%
0,0005% ≤ B ≤ 0,010%,
- le reste de la composition étant constitué de fer et d'impuretés inévitables résultant de l'élaboration

5. Pièce en acier selon la revendication 4, **caractérisée en ce que** la composition dudit acier comprend, les teneurs étant exprimées en poids :
0,15% ≤ C ≤ 0,25%
0,8%≤ Mn ≤ 1,5%
0,1% ≤ Si ≤ 0,35%
0.01% ≤ Cr ≤ 0,3%
Ti≤0.1%
Al ≤ 0,1%
S ≤ 0,05%
P ≤ 0,1 %
0.002% ≤ B ≤ 0,005%,
le reste de la composition étant constitué de fer et d'impuretés inévitables résultant de l'élaboration

6. Procédé de fabrication d'une pièce en acier revêtu, comportant les étapes selon lesquelles :
- on approvisionne une tôle d'acier laminée à chaud ou laminée à froid,
- on effectue un pré-revêtement métallique de ladite tôle par un alliage à base de zinc comprenant, les teneurs étant exprimées en poids, entre 0,7 et 2,5% d'aluminium,
et à titre optionnel un ou plusieurs éléments choisis parmi :
Pb ≤0,003 %
Sb ≤0,003%
Bi ≤0,003%
0,002%≤Si≤0,070%
La< 0,05 %
Ce<0,05 %,
le solde étant constitué de zinc et des inévitables impuretés,
- on effectue optionnellement un pré-traitement thermique
- on découpe ladite tôle pour obtenir une pièce
- on chauffe ladite pièce à une température comprise entre AC₁ et AC₃ + 100°C pendant une durée de maintien supérieure ou égale à 20 s de manière à former, par alliation entre ledit acier et ledit pré-revêtement, un revêtement allié constitué, sur plus de 90% de son épaisseur, d'au moins une phase à base Fe-Zn dont la teneur pondérale en fer est supérieure ou égale à 65% et dont le rapport Fe/Zn est compris entre 1,9 et 4, et de manière à conférer une structure partiellement ou totalement austénitique audit acier
- on déforme ladite pièce à chaud,
- on refroidit ladite pièce dans des conditions propres à conférer les caractéristiques mécaniques visées pour ladite pièce d'acier.

7. Procédé de fabrication selon la revendication 6, **caractérisée en ce que** ledit pré-revêtement est un alliage dont la teneur en aluminium est supérieure à 0,7%, et inférieure ou égale à 0,8% en poids

8. Procédé de fabrication selon la revendication 6, **caractérisée en ce que** ledit pré-revêtement est un alliage dont la teneur en aluminium est supérieure à 0,8%, et inférieure ou égale à 2,5% en poids

9. Procédé de fabrication selon l'une quelconque des revendications 6 à 8, **caractérisé en ce que** l'on approvisionne une tôle d'acier laminée à chaud ou laminée à froid, dont la composition comprend, les teneurs étant exprimées en poids :
0,15%≤C≤0,5%
0,5%≤ Mn ≤ 3%
0,1% ≤ Si ≤ 0,5%
0,01% ≤ Cr ≤ 1%
Ti≤0,2%
Al ≤ 0,1%
S ≤ 0,05%
P≤ 0,1%
0,0005% ≤ B ≤ 0,010%,
- le reste de la composition étant constitué de fer et d'impuretés inévitables résultant de l'élaboration

10. Procédé de fabrication selon la revendication 9, **caractérisé en ce que** l'on approvisionne une tôle d'acier laminée à chaud ou laminée à froid, dont la composition comprend, les teneurs étant exprimées en poids :
0,15% ≤ C ≤ 0,25%
0,8%≤ Mn ≤ 1,5%
0,1% ≤ Si ≤ 0,35%
0,01%≤Cr≤ 0,3%
Ti≤0,1%
Al ≤ 0,1 %
S ≤ 0,05%
P≤0,1%
0,002% ≤ B ≤ 0,005%,
le reste de la composition étant constitué de fer et d'impuretés inévitables résultant de l'élaboration

11. Procédé de fabrication selon l'une quelconque des revendications 6 à 10, **caractérisé en ce que** ledit pré-traitement thermique comporte un chauffage allant à une température allant de 450°C à 520°C pendant une durée allant de 2 à 10 minutes

12. Utilisation d'une pièce selon les revendications 1 à 5, ou fabriquée selon l'une quelconque des revendications 6 à 11, pour la fabrication de pièces de structures ou de sécurité pour véhicule automobile terrestre à moteur.

## Patentansprüche

1. Werkstück aus Stahl beschichtet mit einer Zusammensetzung, welche auf über 90% ihrer Dicke von mindestens einer Phase auf Basis von Fe-Zn mit einem Gewichtsgehalt in Fe größer als oder gleich 65% gebildet ist und in der das Verhältnis Fe/Zn zwischen 1,9 und 4 liegt, wobei die Zusammensetzung durch mindestens eine thermische Legierungs-Behandlung zwischen dem Stahl und einer Vorbeschichtung gebildet wird, wobei die Vorbeschichtung eine Legierung auf Basis von Zink ist, welche, wobei die Gehalte in Gewichtsprozent ausgedrückt sind, zwischen 0,7 und 2,5% Aluminium und gegebenenfalls ein oder mehrere Element(e) aufweist, ausgewählt aus:
Pb ≤ 0,003 %
Sb ≤ 0,003 %
Bi ≤ 0,003 %
0,002 % ≤ Si ≤ 0,070 %
La < 0,05 %
Ce < 0,05 %,
wobei der Rest von Zink und unvermeidbaren Verunreinigungen gebildet ist.

2. Werkstück aus Stahl nach Anspruch 1, **dadurch gekennzeichnet, dass** die Vorbeschichtung eine Legierung ist, in der der Gehalt in Aluminium größer als 0,7 Gewichts-% und weniger als oder gleich 0,8 Gewichts-% ist.

3. Werkstück aus Stahl nach Anspruch 1, **dadurch gekennzeichnet, dass** die Vorbeschichtung eine Legierung ist, in der der Gehalt in Aluminium größer als 0,8 Gewichts-% und weniger als oder gleich 2,5 Gewichts-% ist.

4. Werkstück aus Stahl nach einem der Ansprüche 1 bis 3, **dadurch gekennzeichnet, dass** die Zusammensetzung des Stahls aufweist, wobei die Gehalte in Gewichtsprozent ausgedrückt sind:
0,15 % ≤ C ≤ 0,5 %
0,5 % ≤ Mn ≤ 3 %
0,1 % ≤ Si ≤ 0,5 %
0,01 % ≤ Cr ≤ 1 %
Ti ≤ 0,2 %
Al ≤ 0,1 %
S ≤ 0,05 %
P ≤ 0,1%
0,0005 % ≤ B ≤ 0,010 %,
wobei der Rest der Zusammensetzung von Eisen und unvermeidbaren Verunreinigungen, welche aus der Verarbeitung entstehen, gebildet ist.

5. Werkstück aus Stahl nach Anspruch 4, **dadurch gekennzeichnet, dass** die Zusammensetzung des Stahls aufweist, wobei die Gehalte in Gewichtsprozent ausgedrückt sind:
0,15 °70 ≤ C ≤ 0,25 %
0,8 °70 ≤ Mn ≤ 1,5 %
0,1 % ≤ Si ≤ 0,35 %
0,01 % ≤ Cr ≤ 0,3 %
Ti ≤ 0,1 %
Al ≤ 0,1 %
S ≤ 0,05 %
P ≤ 0,1 %
0,002 % ≤ B ≤ 0,005 %,
wobei der Rest der Zusammensetzung von Eisen und unvermeidbaren Verunreinigungen, welche aus der Verarbeitung entstehen, gebildet ist.

6. Verfahren zur Herstellung eines Werkstücks aus beschichtetem Stahl, welches die Schritte aufweist:
- Bereitstellen eines Stahlblechs, welches warmgewalzt oder kaltgewalzt ist,
- metallisches Vorbeschichten des Blechs mit einer Legierung auf Basis von Zink, welche, wobei die Gehalte in Gewichtsprozent ausgedrückt sind, zwischen 0,7 und 2,5% Aluminium und gegebenenfalls ein oder mehrere Element(e) aufweist, ausgewählt aus:
Pb ≤ 0,003 %
Sb ≤ 0,003 %
Bi ≤ 0,003 %
0,002 % ≤ Si ≤ 0,070 %
La < 0,05 %
Ce < 0,05 %,
wobei der Rest von Zink und unvermeidbaren Verunreinigungen gebildet ist,
- gegebenenfalls Durchführen einer thermischen Vorbehandlung,
- Schneiden des Bleches, um ein Werkstück zu erhalten,
- Erwärmen des Werkstücks auf eine Temperatur zwischen AC₁ und AC₃ + 100 °C für eine Haltezeit größer als oder gleich 20 s, um durch Legieren zwischen dem Stahl und der Vorbeschichtung eine legierte Beschichtung zu bilden, welche auf über 90% ihrer Dicke von mindestens einer Phase auf Basis von Fe-Zn mit einem Gewichtsgehalt in Fe größer als oder gleich 65% gebildet wird, und in der das Verhältnis Fe/Zn zwischen 1,9 und 4 liegt, und um dem Stahl eine teilweise oder vollständig austenitische Struktur zu verleihen,
- Warmverformen des Werkstücks,
- Abkühlen des Werkstücks unter Bedingungen, welche die mechanischen Eigenschaften, welche für das Werkstück angestrebt sind, verleihen können.

7. Verfahren zur Herstellung nach Anspruch 6, **dadurch gekennzeichnet, dass** die Vorbeschichtung eine Legierung ist, in der der Gehalt in Aluminium größer als 0,7 Gewichts-% und weniger als oder gleich 0,8 Gewichts-% ist.

8. Verfahren zur Herstellung nach Anspruch 6, **dadurch gekennzeichnet, dass** die Vorbeschichtung eine Legierung ist, in der der Gehalt in Aluminium größer als 0,8 Gewichts-% und weniger als oder gleich 2,5 Gewichts-% ist.

9. Verfahren zur Herstellung nach einem der Ansprüche 6 bis 8, **dadurch gekennzeichnet, dass** ein Stahlblech, welches warmgewalzt oder kaltgewalzt ist, bereitgestellt wird, dessen Zusammensetzung, wobei die Gehalte in Gewichtsprozent ausgedrückt sind, aufweist:
0,15 °70 ≤ C ≤ 0,5 %
0,5 °70 ≤ Mn ≤ 3 %
0,1 % ≤ Si ≤ 0,5 %
0,01 % ≤ Cr ≤ 1 %
Ti ≤ 0,2 %
Al ≤ 0,1 %
S ≤ 0,05 %
P ≤ 0,1 %
0,0005 % ≤ B ≤ 0,010 %,
wobei der Rest der Zusammensetzung von Eisen und unvermeidbaren Verunreinigungen, welche aus der Verarbeitung entstehen, gebildet ist.

10. Verfahren zur Herstellung nach Anspruch 9, **dadurch gekennzeichnet, dass** ein Stahlblech, welches warmgewalzt oder kaltgewalzt ist, bereitgestellt wird, dessen Zusammensetzung, wobei die Gehalte in Gewichtsprozent ausgedrückt sind, aufweist:
0,15 °70 ≤ C ≤ 0,25 %
0,8 % ≤ Mn ≤ 1,5 %
0,1 % ≤ Si ≤ 0,35 %
0,01 °70 ≤ Cr ≤ 0,3 %
Ti ≤ 0,1 %
Al ≤ 0,1 %
S ≤ 0,05 %
P ≤ 0,1 %
0,002 % ≤ B ≤ 0,005 %,
wobei der Rest der Zusammensetzung von Eisen und unvermeidbaren Verunreinigungen, welche aus der Verarbeitung entstehen, gebildet ist.

11. Verfahren zur Herstellung nach einem der Ansprüche 6 bis 10, **dadurch gekennzeichnet, dass** die thermische Vorbehandlung ein Erwärmen auf eine Temperatur von 450 °C bis 520 °C für einen Zeitraum von 2 bis 10 Minuten aufweist.

12. Verwendung eines Werkstücks nach den Ansprüchen 1 bis 5, oder hergestellt nach einem der Ansprüche 6 bis 11, zur Herstellung von Struktur- oder Sicherheitsteilen für motorische Erdkraftfahrzeuge.

## Claims

1. Steel part coated with a compound consisting, over more than 90% of its thickness, of at least one Fe-Zn-based phase, the iron content by weight of which is greater than or equal to 65% and the Fe/Zn ratio of which is between 1.9 and 4, said compound being formed by at least one heat treatment for alloying between said steel and a precoat, said precoat being a zinc-based alloy comprising, the contents being expressed by weight, between 0.7 and 2.5% aluminium and, optionally, one or more elements selected from:
Pb ≤ 0.003%
Sb ≤ 0.003%
Bi ≤ 0.003%
0.002% ≤ Si ≤ 0.070%
La < 0.05%
Ce < 0.05%,
the balance consisting of zinc and inevitable impurities.

2. Steel part according to claim 1, **characterized in that** said precoat is an alloy, the aluminium content of which is greater than 0.7% and less than or equal to 0.8% by weight.

3. Steel part according to claim 1, **characterized in that** said precoat is an alloy, the aluminium content of which is greater than 0.8% and less than or equal to 2.5% by weight.

4. Steel part according to any one of claims 1 to 3, **characterized in that** the composition of said steel comprises, the contents being expressed by weight:
0.15% ≤ C ≤ 0.5%
0.5% ≤ Mn ≤ 3%
0.1% ≤ Si ≤ 0.5%
0.01% ≤ Cr ≤ 1%
Ti ≤ 0.2%
Al ≤ 0.1%
S ≤ 0.05%
P ≤ 0.1%
0.0005% ≤ B ≤ 0.010%,
- the remainder of the composition consisting of iron and inevitable impurities resulting from production.

5. Steel part according to claim 4, **characterized in that** the composition of said steel comprises, the contents being expressed by weight:
0.15% ≤ C ≤ 0.25%
0.8% ≤ Mn ≤ 1.5%
0.1% ≤ Si ≤ 0.35%
0.01% ≤ Cr ≤ 0.3%
Ti ≤ 0.1%
Al ≤ 0.18
S ≤ 0.05%
P ≤ 0.1%
0.002% ≤ B ≤ 0.005%,
the remainder of the composition consisting of iron and inevitable impurities resulting from production.

6. Method for manufacturing a coated steel part, including the steps according to which:
- a hot-rolled or cold-rolled laminated steel sheet is provided,
- said sheet is coated with a metal precoat consisting of a zinc-based alloy comprising, the contents being expressed by weight, between 0.7 and 2.5% aluminium and, optionally, one or more elements selected from:
Pb ≤ 0.003%
Sb ≤ 0.003%
Bi ≤ 0.003%
0.002% ≤ Si ≤ 0.070%
La < 0.05%
Ce < 0.05%,
the balance consisting of zinc and inevitable impurities,
- a heat pretreatment is optionally carried out,
- said sheet is cut so as to obtain a part,
- said part is heated to a temperature between AC₁ and AC₃ + 100°C for a holding time greater than or equal to 20 s so as to form, by alloying between said steel and said precoat, an alloyed coating consisting, over more than 90% of its thickness, of at least one Fe-Zn-based phase, the iron content by weight of which is greater than or equal to 65% and the Fe/Zn ratio of which is between 1.9 and 4, and so as to confer on said steel a partially or completely austenitic structure,
- said part is hot-formed,
- said part is cooled under conditions suitable for conferring the mechanical properties intended for said steel part.

7. Manufacturing method according to claim 6, **characterized in that** said precoat is an alloy, the aluminium content of which is greater than 0.7% and less than or equal to 0.8% by weight.

8. Manufacturing method according to claim 6, **characterized in that** said precoat is an alloy, the aluminium content of which is greater than 0.8% and less than or equal to 2.5% by weight.

9. Manufacturing method according to any one of claims 6 to 8, **characterized in that** a hot-rolled or cold-rolled laminated steel sheet is provided, the composition of which comprises, the contents being expressed by weight:
0.15% ≤ C ≤ 0.5%
0.5% ≤ Mn ≤ 3%
0.1% ≤ Si ≤ 0.5%
0.01% ≤ Cr ≤ 1%
Ti ≤ 0.2%
Al ≤ 0.1%
S ≤ 0.05%
P ≤ 0.1%
0.0005% ≤ B ≤ 0.010%,
- the remainder of the composition consisting of iron and inevitable impurities resulting from production.

10. Manufacturing method according to claim 9, **characterized in that** a hot-rolled or cold-rolled laminated steel sheet is provided, the composition of which comprises, the contents being expressed by weight:
0.15% ≤ C ≤ 0.25%
0.8% ≤ Mn ≤ 1.5%
0.1% ≤ Si ≤ 0.35%
0.01% ≤ Cr ≤ 0.3%
Ti ≤ 0.1%
Al ≤ 0.1%
S ≤ 0.05%
P ≤ 0.1%
0.002% ≤ B ≤ 0.005%,
the remainder of the composition consisting of iron and inevitable impurities resulting from production.

11. Manufacturing method according to any one of claims 6 to 10, **characterized in that** said heat pretreatment comprises a heating up to a temperature ranging from 450°C to 520°C for a duration ranging from 2 to 10 minutes.

12. Use of a part according to claims 1 to 5 or manufactured according to any one of claims 6 to 11 for manufacturing structural or safety parts for a land motor vehicle.
